# EUROPEAN PATENT APPLICATION

(11) **EP 4 667 253 A1**
(43) Date of publication of application: **24.12.2025**
(21) Application number: 24796957.9
(22) Date of filing: 22.04.2024
(51) Int. Cl.: B60K 1/00, B60H 1/08, B60K 11/02, B60L 50/60, B60L 58/26, H02K 11/33

(54) **VEHICLE DRIVE DEVICE**

(30) Priority: 28.04.2023 JP 2023074541; 31.05.2023 JP 2023089639
(71) Applicant: AISIN CORPORATION, Kariya-shi, Aichi 448-8650 (JP)
(72) Inventor: MAEDA, Takuyo, Kariya-shi, Aichi 448-8650 (JP); KATSUDA, Takuya, Kariya-shi, Aichi 448-8650 (JP); KOSHIDA, Takafumi, Kariya-shi, Aichi 448-8650 (JP); MURAKAMI, Satoshi, Kariya-shi, Aichi 448-8650 (JP); DOI, Takayuki, Kariya-shi, Aichi 448-8650 (JP); KUROKAWA, Akifumi, Kariya-shi, Aichi 448-8650 (JP)
(74) Representative: Kramer Barske Schmidtchen Patentanwälte PartG mbB
(86) International application number: PCT/JP2024/015676
(87) International publication number: WO 2024/225210

(57) **Abstract**

A vehicle drive device includes: a casing incorporating an electronic circuit unit including at least an electronic circuit for driving an electric motor that transmits a drive rotational force to a traveling system of a vehicle; a cooling plate to which the electronic circuit unit is fixed and through which a cooling liquid flows; and a water pump configured to circulate the cooling liquid inside the cooling plate. The water pump is fixed to an outer surface of the casing at a position overlapping at least a part of the cooling plate in a side view.

## Description

### Technical Field

This disclosure relates to a vehicle drive device.

### Background Art

Taking a hybrid vehicle as an example, PTL 1 describes a cooling device that cools an electric device by circulating a cooling liquid between a radiator and the electric device to prevent a temperature increase of the electric device.

The cooling device described in PTL 1 is provided in a hybrid vehicle, and the hybrid vehicle includes a motor generator and an inverter as electric devices. In PTL 1, the cooling device includes a first flow path connecting the radiator and the inverter and a second flow path connecting the motor generator and the radiator in a circulation flow path through which the cooling liquid circulates. A heat insulating material is provided in the first flow path and a heat radiation member is provided in the second flow path.

In the related art, a drive unit for electric vehicle including at least an electric motor that transmits a drive rotational force to a traveling system of a vehicle is known (for example, see PTL 2). The drive unit for electric vehicle is downsized by housing and integrating the electric motor and a gear portion in a housing, and is connected to a cooling system that performs heat exchange between oil circulating in the drive unit for electric vehicle and cooling water.

In the cooling system described in PTL 2, an inverter unit is attached to the drive unit for electric vehicle, and heat exchange is performed between the cooling water, which circulates from the inverter unit to an oil cooler using a water pump, and the oil circulating in the drive unit for electric vehicle. Here, the water pump is attached to a lower portion of a motor housing portion of the drive unit for electric vehicle, and a cooling pipe is routed between the water pump and the inverter unit.

### Citation List

### Patent Literature

PTL 1: JP 2008-120323A
PTL 2: JP 2020-178485A

### Summary of Invention

### Technical Problem

In the hybrid vehicle described in PTL 1, since the heat insulating material is provided in the first flow path, the inconvenience that a temperature of the cooling liquid flowing through the first flow path increases due to heat in an engine room is prevented, and efficient cooling of the inverter is enabled. In this hybrid vehicle, since the heat radiation member is provided in the second flow path, a temperature of the cooling liquid flowing through the second flow path is lowered before the cooling liquid is supplied to the radiator.

In an electric vehicle (EV), since a performance of a battery decreases in a cold region, it may be necessary to increase a temperature of the battery. Not only the EV but also an air conditioning system for increasing a temperature in a vehicle cabin in the cold region is often required to increase the temperature.

In response to such a problem, since the electric vehicle does not include an engine, waste heat of the engine cannot be used, and it is conceivable that the temperature of the cooling liquid is increased and used by heat generated with an operation of the electric device. However, in the cold region, the heat of the cooling liquid is easily radiated, and it is difficult to use the heat generated by the electric device, and there is room for improvement.

In the cooling system described in PTL 2, since the water pump is attached to the lower portion of the housing and the cooling pipe is exposed, heat is radiated in the cooling pipe, and a heat recovery rate decreases.

Therefore, there is a demand for a vehicle drive device capable of efficient heat management while achieving miniaturization.

### Solution to Problem

A characteristic configuration of a vehicle drive device according to the disclosure includes: a casing incorporating an electronic circuit unit including at least an electronic circuit for driving an electric motor that transmits a drive rotational force to a traveling system of a vehicle; a cooling plate to which the electronic circuit unit is fixed and through which a cooling liquid flows; and a water pump configured to circulate the cooling liquid inside the cooling plate. The water pump is fixed to an outer surface of the casing at a position overlapping at least a part of the cooling plate in a side view.

In this characteristic configuration, the water pump is fixed to the outer surface of the casing at a position overlapping at least a part of the cooling plate in the side view. Accordingly, the cooling liquid can flow between the water pump and the cooling plate disposed adjacent to the electronic circuit unit. A length of a pipe connecting the cooling plate and the water pump can be shortened, heat radiation through the pipe can be prevented, and a heat recovery rate can be improved.

As described above, the vehicle drive device is capable of efficient heat management while achieving miniaturization.

### Brief Description of Drawings

[Fig. 1] Fig. 1 is an exploded perspective view of an integration unit.
[Fig. 2] Fig. 2 is a partial longitudinal sectional view of the integration unit.
[Fig. 3] Fig. 3 is a schematic diagram illustrating a vehicle drive device according to a first embodiment.
[Fig. 4] Fig. 4 is a schematic diagram illustrating the vehicle drive device according to the first embodiment.
[Fig. 5] Fig. 5 is a diagram illustrating a circuit configuration of the vehicle drive device according to the first embodiment.
[Fig. 6] Fig. 6 is a side view of a water-cooling plate housed in the integration unit.
[Fig. 7] Fig. 7 is a perspective view of the water-cooling plate to which an oil cooler is attached.
[Fig. 8] Fig. 8 is a partial perspective cross-sectional view of the vehicle drive device according to the first embodiment.
[Fig. 9] Fig. 9 is a partial side view of the vehicle drive device according to the first embodiment.
[Fig. 10] Fig. 10 is a partial side view of the vehicle drive device according to the first embodiment.
[Fig. 11] Fig. 11 is a schematic diagram illustrating a vehicle drive device according to a second embodiment.
[Fig. 12] Fig. 12 is a plan view illustrating a heat management structure of an electric vehicle.
[Fig. 13] Fig. 13 is a block diagram illustrating flows of a cooling liquid and cooling oil of the vehicle drive device.
[Fig. 14] Fig. 14 is a block circuit diagram illustrating a control configuration.
[Fig. 15] Fig. 15 is a diagram illustrating a heat management structure according to another embodiment (a).

### Description of Embodiments

Hereinafter, an embodiment of a vehicle drive device will be described with reference to the drawings. However, this disclosure is not limited to the following embodiments, and various modifications can be made without departing from the gist of this disclosure.

An electric vehicle includes a drive unit for electric vehicle that drives wheels by a current supplied from a battery. Examples of the electric vehicle include automobiles including a motor as a traveling drive source (such as a hybrid electric vehicle (HEV), a plug-in hybrid electric vehicle (PHEV), a battery electric vehicle (BEV), and a fuel cell electric vehicle (FCEV)).

### [First Embodiment]

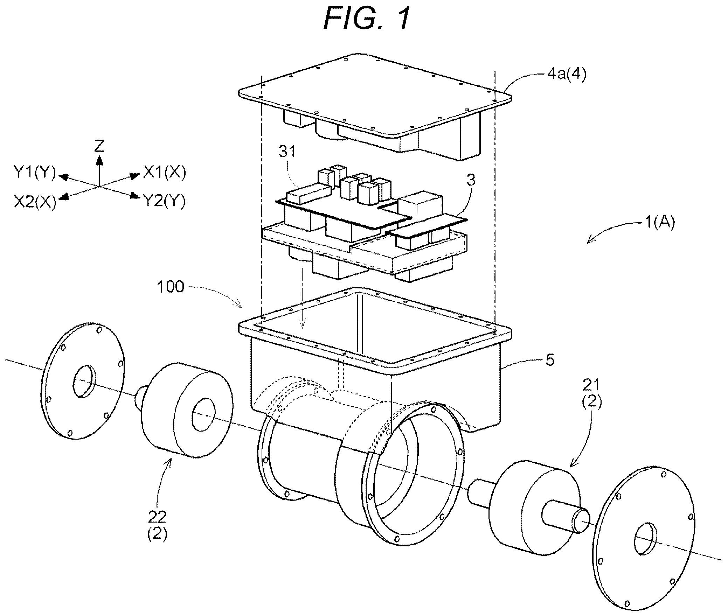

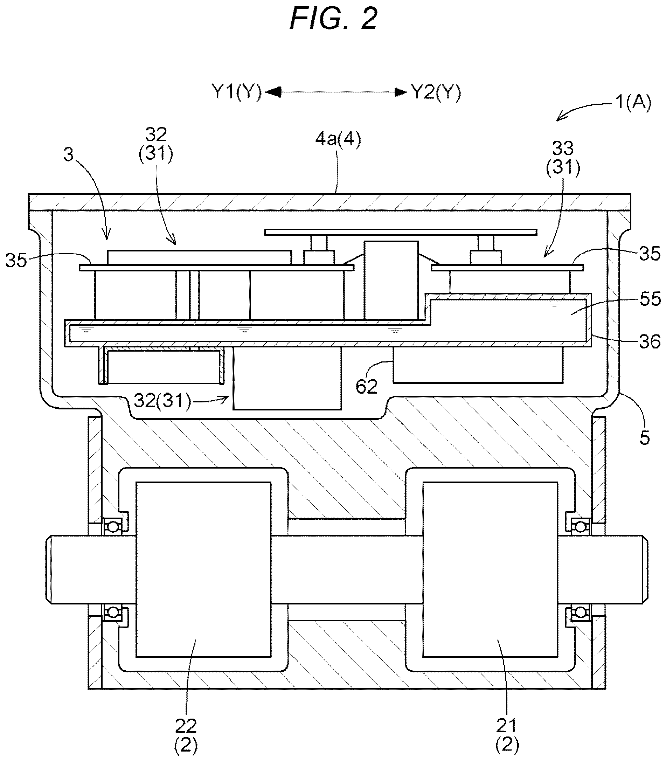

The electric vehicle includes an integration unit 1 illustrated in Figs. 1 and 2. The integration unit 1 includes a drive unit for electric vehicle 2 (hereinafter referred to as a "vehicle drive unit 2"), an electronic circuit unit 3, and a cooling module 4 (an example of a refrigerant unit). In the integration unit 1, the vehicle drive unit 2 and the electronic circuit unit 3 are housed in and integrated with a unit case 5 (an example of a casing). The cooling module 4 is disposed adjacent to the electronic circuit unit 3. In the following drawings, for example, as illustrated in Fig. 1, a traveling direction of the vehicle (vehicle front-rear direction) is an X direction, a width direction of the vehicle (vehicle left-right direction) is a Y direction, and a height direction of the vehicle is a Z direction. A front side in the traveling direction of the vehicle is defined as an X1 side, a rear side in the traveling direction is defined as an X2 side, a left side in the vehicle width direction is defined as a Y1 side, and a right side in the vehicle width direction is defined as a Y2 side.

In the cooling module 4, a chiller 86, a water cooling condenser 81, an accumulator 82, and auxiliary devices such as a valve and a pump, which will be described later, and parts of a cooling flow path B and a refrigerant flow path D are modularized and assembled to the unit case 5. Fig. 2 illustrates only a refrigerant manifold 4a including the refrigerant flow path D in the cooling module 4. A vehicle drive device A in the embodiment described below illustrates an example in which the vehicle drive unit 2, the electronic circuit unit 3, and the refrigerant manifold 4a are housed in the unit case 5, but the shape and structure of the integration unit 1 are not particularly limited.

The vehicle drive unit 2 includes at least an electric motor 21 that transmits a drive rotational force to a traveling system of the vehicle. Specifically, the vehicle drive unit 2 includes the electric motor 21, a gear 22 having a speed reduction mechanism, and the like. The electronic circuit unit 3 includes at least an electronic circuit 31 for driving the electric motor 21 and the like. The electronic circuit unit 3 is housed in the unit case 5 to constitute a power supply module 100.

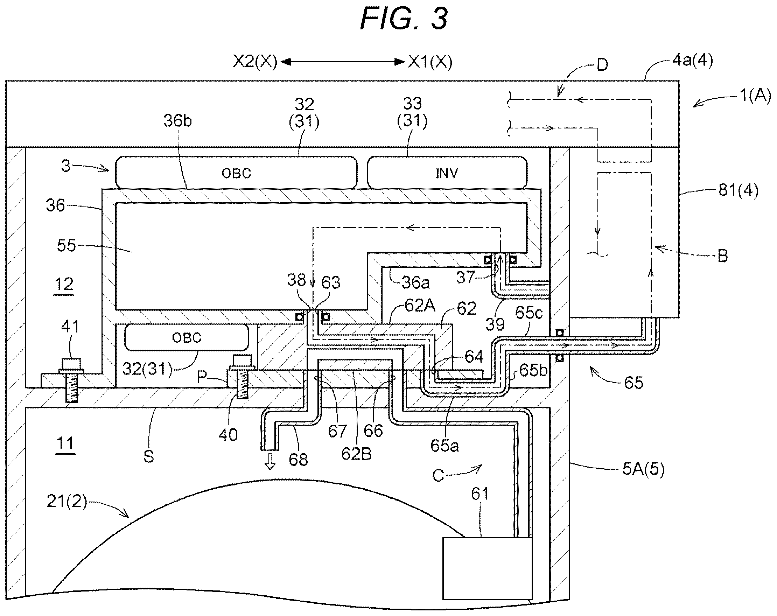

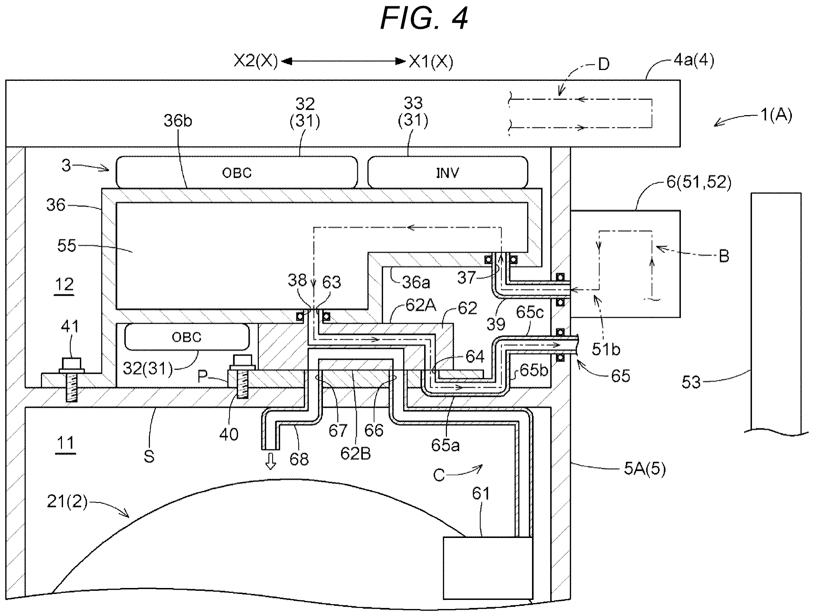

As illustrated in Fig. 2, in the integration unit 1, in the unit case 5, the vehicle drive unit 2 is disposed below, and the electronic circuit unit 3 is disposed above. As illustrated in Figs. 3 and 4, the integration unit 1 includes a first space 11 in which the vehicle drive unit 2 is disposed, a second space 12 in which the electronic circuit unit 3 is disposed, and a partition wall S that partitions the first space 11 and the second space 12. That is, the integration unit 1 is partitioned into the lower first space 11 and the upper second space 12 by the partition wall S.

The electronic circuit unit 3 is disposed in an upper portion of the unit case 5, and is fixed to the partition wall S. The vehicle drive unit 2 is disposed below the partition wall S. As illustrated in Fig. 3, the cooling module 4 is disposed adjacent to the electronic circuit unit 3. Specifically, the refrigerant manifold 4a is disposed in the upper portion of the unit case 5, and the water cooling condenser 81 is mounted on a side surface 5A (an example of an outer surface) of the unit case 5. As described above, the integration unit 1 includes the cooling module 4 in which the refrigerant manifold 4a including the refrigerant flow path D through which the refrigerant flows and the water cooling condenser 81 are integrated. In the cooling module 4, the refrigerant manifold 4a is located above the water cooling condenser 81.

As illustrated in Fig. 4, a valve unit 6 is disposed on the side surface 5A of the unit case 5. In the embodiment, on the side surface 5A of the unit case 5, the water cooling condenser 81 is located on the left side (Y1 direction side) of the front side (X1 direction side), and the valve unit 6 is located on the right side (Y2 direction side) of the front side (X1 direction side). The valve unit 6 is disposed in the cooling flow path B and includes a water pump 51 and a valve 52.

As illustrated in Figs. 2 to 4, a plurality of electronic components constituting on-board chargers (OBC) 32 (voltage conversion circuits) and an inverter (INV) 33 as the electronic circuit 31 are mounted on a substrate 35. The inverter 33 controls a current supplied from a battery 87 to the electric motor 21. The on-board charger 32 controls at least a voltage with which the battery 87 is charged. In the embodiment, the inverter 33 is disposed above the electronic circuit unit 3, and the on-board charger 32 is disposed above and below the electronic circuit unit 3.

As described above, by including not only the inverter 33 but also the on-board charger 32 in the electronic circuit 31 provided in the electronic circuit unit 3, the vehicle drive device A can be further miniaturized. The arrangement of the electronic circuit 31 mounted on the electronic circuit unit 3 illustrated in Figs. 2 to 4 is an example, and the arrangement of the electronic circuit 31 can be changed as appropriate. The electronic component (electronic circuit 31) mounted on the substrate 35 is cooled by a cooling plate 36 constituting a part of a second flow path 55 of the cooling flow path B described later inside the electronic component. Accordingly, the electronic circuit unit 3 (power supply module 100) can be cooled by a cooling fluid flowing through the cooling flow path B.

As illustrated in Figs. 3 to 5, the vehicle drive device A includes the integration unit 1 in which the vehicle drive unit 2 and the electronic circuit unit 3 are integrated, the cooling flow path B that circulates the cooling fluid to the electronic circuit unit 3 (power supply module 100), an oil flow path C that circulates oil to the vehicle drive unit 2, and the refrigerant flow path D that circulates a refrigerant for cooling and heating the vehicle interior. As the cooling fluid, for example, an antifreeze containing ethylene glycol and the like as a main component, cooling water such as a long-life coolant, or a cooling liquid such as insulating oil flows through the cooling flow path B. A refrigerant (cooling fluid) such as hydrofluorocarbon (HFC) or hydrofluoroolefin (HFO) flows through the refrigerant flow path D. In the cooling flow path B, a refrigerant may be circulated as a cooling fluid instead of the cooling liquid to exchange heat between the oil and the refrigerant. That is, the vehicle drive device A may unify the cooling fluid flowing through the cooling flow path B and the refrigerant flow path D into the refrigerant by causing the refrigerant to flow through the cooling flow path B.

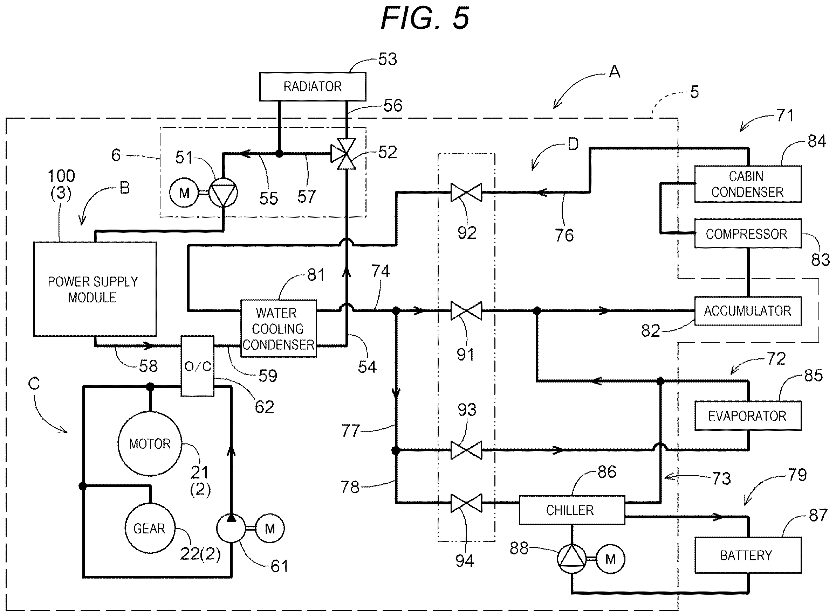

The cooling flow path B will be described. The cooling flow path B is a flow path illustrated above the electric motor 21 in Fig. 5. The cooling flow path B includes the valve unit 6, the power supply module 100, an oil cooler 62 (an example of a first heat exchanger) described later, the water cooling condenser 81 (an example of a second heat exchanger), a radiator 53, and the like in the middle of the flow path. The cooling flow path B includes a first flow path 54 extending from the water cooling condenser 81 toward the radiator 53 and the second flow path 55 extending from the radiator 53 toward the water cooling condenser 81. In the electronic circuit unit 3, a part of the second flow path 55 of the cooling flow path B is formed as an internal flow path of the cooling plate 36. A part of the cooling flow path B is disposed inside the unit case 5.

The cooling flow path B circulates the cooling liquid (an example of the cooling fluid) through the power supply module 100 (the electronic circuit unit 3), the oil cooler 62, the water cooling condenser 81, and the radiator 53 in this order. In the cooling flow path B, the valve 52 that can be switched between a first state, in which the cooling liquid flows through the radiator 53, and a second state, in which the inflow of the cooling liquid to the radiator 53 is blocked and bypassed, is disposed in the first flow path 54 that supplies the cooling liquid to the radiator 53. Accordingly, the cooling flow path B can be switched by the valve 52 between a flow path 56, in which the cooling liquid joins the second flow path 55 through the radiator 53, and a flow path 57 in which the cooling liquid flows without passing through the radiator 53 and joins the second flow path 55. In the cooling flow path B, the water pump 51 is disposed downstream of the valve 52 and the radiator 53. The cooling flow path B includes a flow path 58 extending from the electronic circuit unit 3 toward the oil cooler 62 and a flow path 59 extending from the oil cooler 62 toward the water cooling condenser 81.

Next, the oil flow path C will be described. The oil flow path C is a flow path illustrated below the electronic circuit unit 3 in Fig. 5. The oil flow path C includes an oil pump 61 and the oil cooler 62 in the middle of the flow path, and supplies oil to the electric motor 21 and the like to circulate the oil to the vehicle drive unit 2. The oil cooler 62 is located downstream of the power supply module 100 (electronic circuit unit 3) in the cooling flow path B, and performs heat exchange between the oil and the cooling liquid circulating in the cooling flow path B.

Next, the refrigerant flow path D will be described. The refrigerant flow path D is a flow path illustrated on the right side in Fig. 5, and circulates the refrigerant for cooling and heating. The refrigerant flow path D includes a heating flow path 71 that circulates the refrigerant for heating the vehicle interior, a cool flow path 72 that circulates the refrigerant for cooling the vehicle interior, and a battery cooling flow path 73 that circulates the refrigerant to cool the battery 87 mounted on the vehicle. In the heating flow path 71, the water cooling condenser 81, the accumulator 82, a compressor 83, and a cabin condenser 84 (heating condenser) are disposed in this order to constitute a heat pump as a whole. The refrigerant flow path D includes the water cooling condenser 81 that exchanges heat with the cooling liquid circulating through the cooling flow path B in the middle of the flow path. The water cooling condenser 81 is located downstream of the oil cooler 62 in the cooling flow path B, and performs heat exchange between the refrigerant and the cooling liquid circulating in the cooling flow path B.

In the heating flow path 71, an on-off valve 91 is disposed in a flow path 74 between the water cooling condenser 81 and the accumulator 82, and a first expansion valve 92 is disposed in a flow path 76 between the cabin condenser 84 and the water cooling condenser 81. In the example illustrated in Fig. 5, the compressor 83 and the cabin condenser 84 are disposed outside the unit case 5.

The cool flow path 72 is constituted by a flow path 77 branched from the flow path 74 upstream of the on-off valve 91. The flow path 77 includes a second expansion valve 93 and an evaporator 85 in this order in the middle of the flow path, and joins the flow path 74 downstream of the on-off valve 91. That is, when the second expansion valve 93 is driven in a state where the on-off valve 91 is closed, the refrigerant flows through the flow path 77, and the vehicle cabin is cooled by the evaporator 85. In the example illustrated in Fig. 5, in the cool flow path 72, the evaporator 85 is disposed outside the unit case 5.

The battery cooling flow path 73 is constituted by a flow path 78 branched from the flow path 77 of the cool flow path 72 upstream of the second expansion valve 93. The flow path 78 includes a third expansion valve 94 and the chiller 86 in this order in the middle of the flow path, and joins the flow path 77 downstream of the evaporator 85. That is, when the third expansion valve 94 is driven in a state where the on-off valve 91 is closed, the refrigerant flows through the flow path 78, and heat is exchanged by the chiller 86 between the refrigerant and a cooling liquid circulating through a cooling circulation path 79. In the refrigerant flow path D, the on-off valve 91, the first expansion valve 92, the second expansion valve 93, and the third expansion valve 94 are preferably modularized and integrated with the cooling module 4.

Further, the chiller 86 disposed in the battery cooling flow path 73 is also disposed in the cooling circulation path 79 that circulates the cooling liquid to the battery 87. A water pump 88 is disposed in the middle of the flow path of the cooling circulation path 79. The battery 87 is disposed in, for example, a vehicle cabin underfloor space located outside and behind the unit case 5 in the battery cooling flow path 73.

### [Cooling Plate]

As illustrated in Figs. 3 and 4, the cooling plate 36 for cooling the power supply module 100 and the electronic circuit unit 3 are housed in the second space 12 of the unit case 5. The cooling plate 36 is made of metal having high thermal conductivity such as aluminum, and is integrally formed by joining a plate-shaped lower plate 36a and an upper plate 36b by a method such as welding. A space is formed inside the cooling plate 36 (between the lower plate 36a and the upper plate 36b), and the cooling liquid flows through the space. By exchanging heat between the power supply module 100 and the cooling liquid, a temperature of the power supply module 100 is lowered and a temperature of the cooling liquid is raised.

As illustrated in Figs. 3 and 4, the second flow path 55 of the cooling plate 36 is disposed in a horizontal direction. In the embodiment, the cooling liquid flows in from an inlet 37 of the cooling plate 36, and the cooling liquid flows out from an outlet 38.

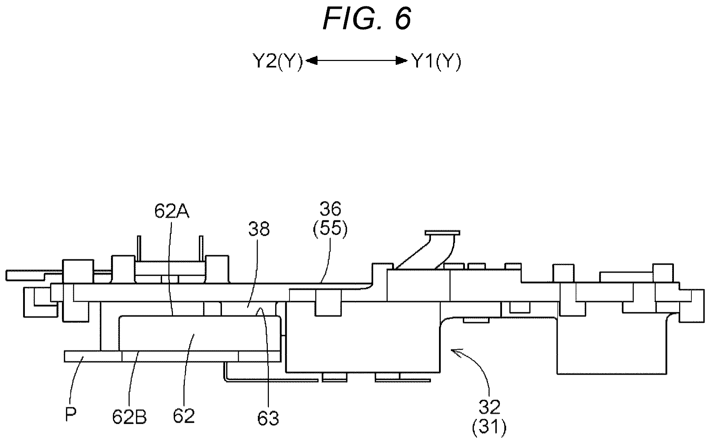

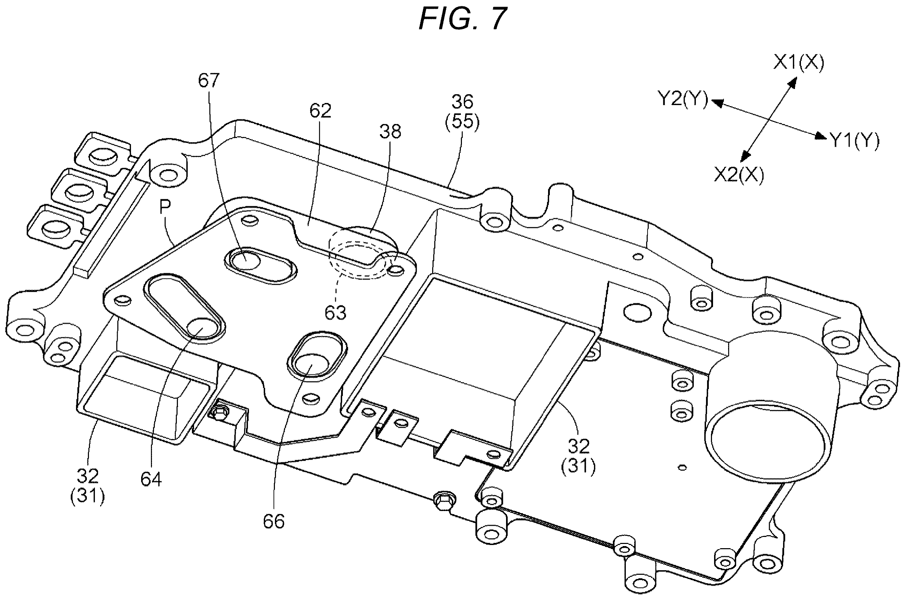

As illustrated in Figs. 6 and 7, the oil cooler 62 has, for example, a box shape having an upper surface 62A on the electronic circuit 31 side and a lower surface 62B on the electric motor 21 side.

The upper surface 62A of the oil cooler 62 is provided with a cooling liquid inlet 63 through which the cooling liquid flows in from above, and the lower surface 62B is provided with a cooling liquid outlet 64 that extends toward a lateral side of the oil cooler 62 and through which the cooling liquid flows out. The oil cooler 62 has an oil inlet 66 through which oil flows in and an oil outlet 67 through which oil flows out on the lower surface 62B.

The oil cooler 62 is unevenly engaged with the cooling plate 36 in a state of being disposed in the second space 12. Specifically, the outlet 38 formed in the lower plate 36a of the cooling plate 36 is a tubular portion protruding downward, and the outlet 38 of the cooling plate 36 is inserted and fitted into the cooling liquid inlet 63 of the oil cooler 62. Although not illustrated, the cooling liquid inlet 63 of the oil cooler 62 may be constituted by a tubular portion protruding upward, and the outlet 38 of the cooling plate 36 may be constituted by an opening. In this case, the cooling liquid inlet 63 (tubular portion) of the oil cooler 62 is inserted and fitted into the outlet 38 of the cooling plate 36. A support plate P is joined to the lower surface 62B of the oil cooler 62, and the oil cooler 62 is located with respect to the partition wall S and fastened to the partition wall S by a screw member 40 and the like (also see Fig. 4). The electronic circuit unit 3 including the cooling plate 36 is also located with respect to the partition wall S and fastened to the partition wall S by a screw member 41 and the like (also see Fig. 4).

As illustrated in Fig. 7, in the embodiment, in the oil cooler 62, the cooling liquid inlet 63 and the cooling liquid outlet 64, and the oil inlet 66 and the oil outlet 67 are respectively disposed on diagonal lines on a projection plane of a plane along the lower plate 36a of the cooling plate 36. Specifically, on the projection plane of the plane along the lower plate 36a of the cooling plate 36, the cooling liquid inlet 63 is disposed closer to the X1 direction and the Y1 direction, and the cooling liquid outlet 64 is disposed closer to the X2 direction and the Y2 direction. Similarly, on the projection plane of the plane along the lower plate 36a, the oil inlet 66 is disposed closer to the X2 direction and the Y1 direction, and the oil outlet 67 is disposed closer to the X1 direction and the Y2 direction.

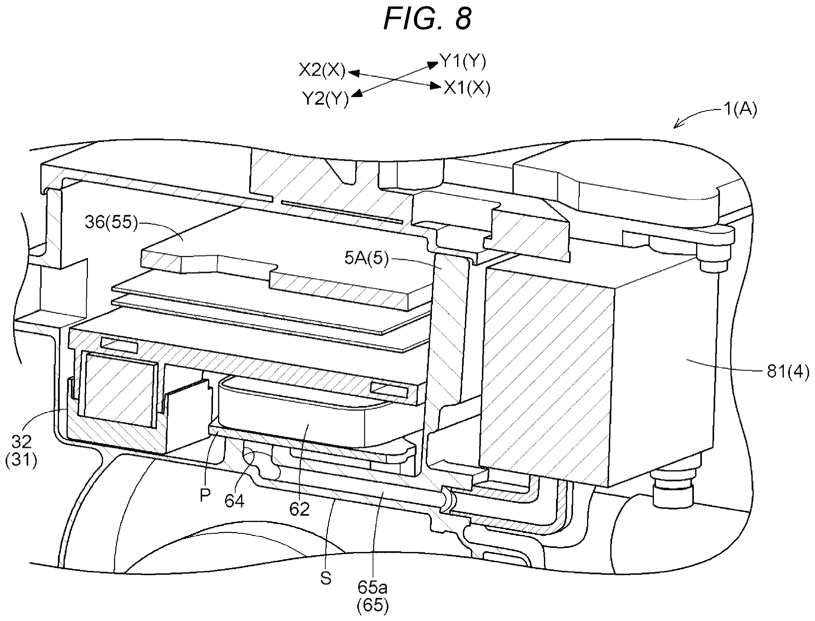

As illustrated in Fig. 8, the oil cooler 62 and the water cooling condenser 81 are disposed at positions facing each other across the wall (side surface 5A) of the unit case 5. As illustrated in Fig. 3, the water cooling condenser 81 is attached to the side surface 5A of the unit case 5 at a position close to the oil cooler 62. A flow path portion 65 is provided between the cooling liquid outlet 64 and the water cooling condenser 81. In the example illustrated in Fig. 3, the flow path portion 65 includes a first part 65a formed along a wall surface of the partition wall S, a second part 65b bent from the lower surface 62B toward the upper surface 62A, and a third part 65c extending in the same direction as the first part 65a and continuous with the inside and outside of the unit case 5. That is, the third part 65c is formed to penetrate the side surface 5A of the unit case 5, and is connected to the inside of the water cooling condenser 81.

As illustrated in Fig. 8, the flow path portion 65 may include only the first part 65a along the partition wall S without including the second part 65b and the third part 65c between the cooling liquid outlet 64 of the oil cooler 62 and the water cooling condenser 81.

As described above, since the oil cooler 62 and the water cooling condenser 81 are close to each other and the flow path portion 65 is provided between the cooling liquid outlet 64 and the water cooling condenser 81, a pipe portion (flow path portion 65) of the cooling liquid connected to the oil cooler 62 does not occupy a large area in the height direction of the oil cooler 62, and the integration unit 1 can be made compact even when the oil cooler 62 is disposed between the vehicle drive unit 2 and the electronic circuit unit 3 (power supply module 100).

As illustrated in Fig. 3 and Fig. 4, a supply portion 68 that supplies oil toward the electric motor 21 is connected to the oil outlet 67 of the oil cooler 62, and the oil flowing out from the supply portion 68 is disposed to flow out from the lower surface 62B of the oil cooler 62 toward the electric motor 21. Thus, the oil flows out from the lower surface 62B of the oil cooler 62 toward the electric motor 21.

As illustrated in Figs. 4, 9, and 10, the water pump 51 is fixed to the side surface 5A of the unit case 5 at a position overlapping at least a part of the cooling plate 36 in a side view. As illustrated in Fig. 4, the water pump 51 is disposed on the same side as the radiator 53 with respect to the integration unit 1.

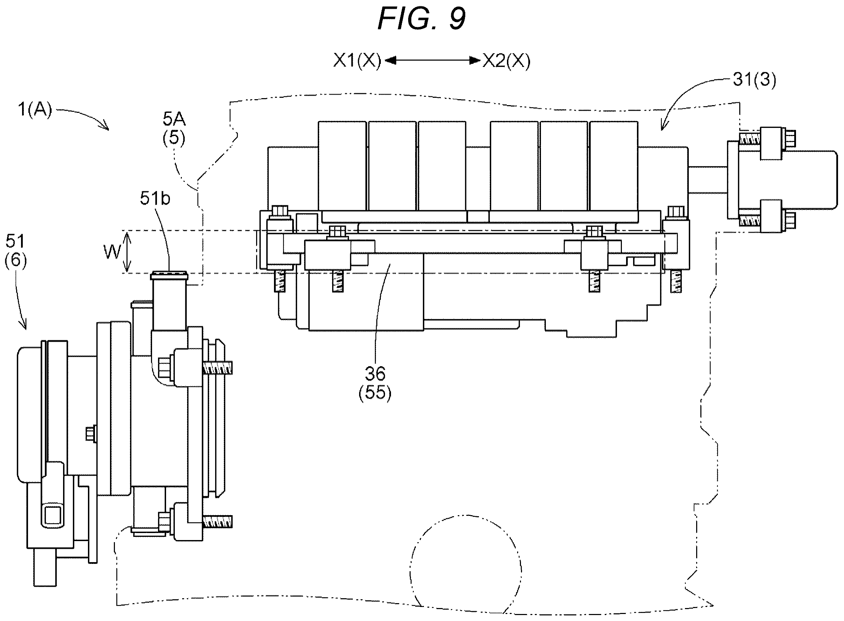

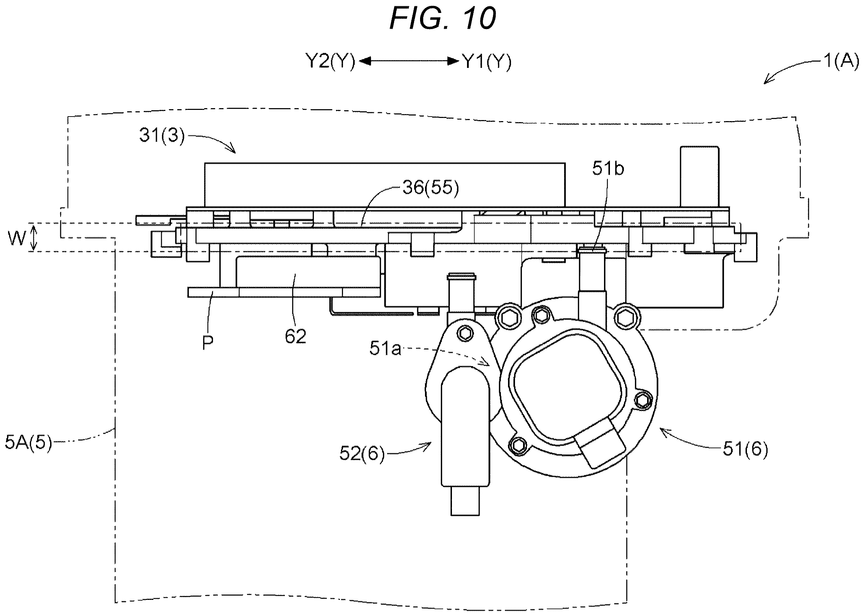

As illustrated in Figs. 9 and 10, the water pump 51 has a cooling liquid suction port 51a and a cooling liquid discharge port 51b, and is disposed such that the cooling liquid discharge port 51b overlaps at least a part of the cooling plate 36 in the side view. Specifically, the cooling liquid discharge port 51b of the water pump 51 is located within a width W of the cooling plate 36 in an up-down direction.

As illustrated in the schematic diagram of Fig. 4, the cooling liquid discharge port 51b of the water pump 51 and the inlet 37 of the cooling plate 36 are connected by a connection flow path 39. The connection flow path 39 is provided below the cooling plate 36 and is formed along the bottom surface (lower plate 36a) of the cooling plate 36.

### [Second Embodiment]

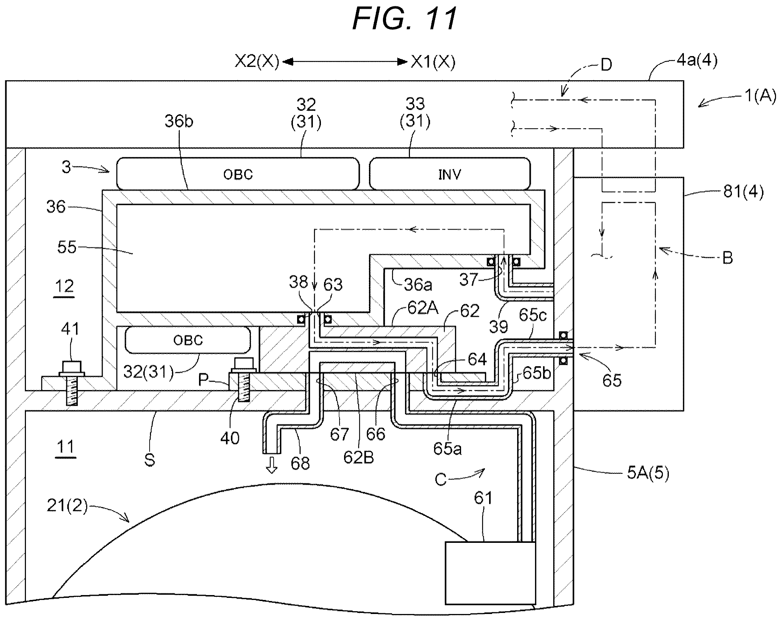

In the first embodiment, the refrigerant manifold 4a and the water cooling condenser 81 are integrally disposed outside the unit case 5. Alternatively, as illustrated in Fig. 11, the refrigerant manifold 4a and the water cooling condenser 81 may be divided, and the refrigerant manifold 4a and the water cooling condenser 81 may be individually assembled to the integration unit 1. Specifically, as illustrated in Fig. 11, the integration unit 1 includes the refrigerant manifold 4a having the refrigerant flow path D through which the refrigerant flows in a state where the refrigerant manifold 4a is separated from and above the water cooling condenser 81. The water cooling condenser 81 is connected to the unit case 5 from the lateral side.

As in the embodiment, by connecting the water cooling condenser 81 to the unit case 5 from the lateral side, a length of a pipe between the oil cooler 62 and the water cooling condenser 81 can be shortened, and the vehicle drive device A can be made compact.

### [Other Embodiments]

(1) In the above embodiments, an example is illustrated in which the water pump 51 and the valve 52 are integrated in the cooling flow path B, but the water pump 51 and the valve 52 may be constituted separately, and the water pump 51 and the valve 52 may be housed in separate housings.
(2) A flow direction of the cooling liquid and the refrigerant for heat exchange and a flow direction of the cooling liquid and the oil may be either the same direction or opposite directions.
(3) In the integration unit 1 in the above embodiments, the vehicle drive unit 2 and the electronic circuit unit 3 are housed in and integrated with the unit case 5, and the vehicle drive unit 2 and the electronic circuit unit 3 may be housed in different cases and connected to the cases respectively.
(4) In the above embodiments, in the oil cooler 62, the cooling liquid inlet 63 is provided in the upper surface 62A and the cooling liquid outlet 64 is provided in the lower surface 62B. Alternatively, in the oil cooler 62, both the cooling liquid inlet 63 and the cooling liquid outlet 64 may be provided in the upper surface 62A.

### [Overview of Above Embodiments]

Hereinafter, in the above embodiments, the following configurations are conceivable.
<1> One aspect of a vehicle drive device (A) includes: a casing (5) incorporating an electronic circuit unit (3) including at least an electronic circuit (31) for driving an electric motor (21) that transmits a drive rotational force to a traveling system of a vehicle; a cooling plate (36) to which the electronic circuit unit (3) is fixed and through which a cooling liquid flows; and a water pump (51) configured to circulate the cooling liquid inside the cooling plate (36). The water pump (51) is fixed to an outer surface (5A) of the casing (5) at a position overlapping at least a part of the cooling plate (36) in a side view.

In this configuration, the water pump (51) is fixed to the outer surface (5A) of the casing (5) at the position overlapping at least a part of the cooling plate (36) in the side view. Accordingly, the cooling liquid can flow between the water pump (51) and the cooling plate (36) disposed adjacent to the electronic circuit unit (3). A length of a pipe connecting the cooling plate (36) and the water pump (51) can be shortened, heat radiation through the pipe can be prevented, and a heat recovery rate can be improved.

As described above, the vehicle drive device (A) is capable of efficient heat management while achieving miniaturization.

<2> The water pump (51) is preferably disposed between a radiator (53) disposed on a vehicle front side and the cooling plate (36).

As in this configuration, when the water pump (51) is disposed on the same side as the radiator (53) with respect to an integration unit (1), the water pump (51), the radiator (53), and the pipe can be shortened, and the vehicle drive device (A) can be made compact.

<3> The water pump (51) preferably has a cooling liquid suction port (51a) and a cooling liquid discharge port (51b), and is preferably disposed such that the cooling liquid discharge port (51b) overlaps at least a part of the cooling plate (36) in the side view.

With this configuration, the length of the pipe between the cooling plate (36) and the cooling liquid discharge port (51b) of the water pump (51) can be shortened, and a pressure loss in a cooling flow path (B) can be reduced, so that the cooling liquid can flow more efficiently.

<4> The water pump (51) preferably has the cooling liquid suction port (51a) and the cooling liquid discharge port (51b), and a connection flow path (39) between the cooling liquid discharge port (51b) and the cooling plate (36) is preferably formed along a bottom surface of the cooling plate (36).

As in this configuration, when the connection flow path (39) between the cooling liquid discharge port (51b) of the water pump (51) and the cooling plate (36) is formed along the bottom surface of the cooling plate (36), the length of the pipe between the water pump (51) and the cooling plate (36) can be further shortened, and the vehicle drive device (A) can be made compact.

<5> The vehicle drive device (A) preferably includes the integration unit (1) in which the electronic circuit unit (3) and a drive unit for electric vehicle (2) including at least the electric motor (21) are incorporated and integrated in the casing (5).

In this configuration, since the vehicle drive device (A) includes the integration unit (1) in which the drive unit for electric vehicle (2) and the electronic circuit unit (3) are integrated, the vehicle drive device (A) can be miniaturized as compared with a case where the drive unit for electric vehicle (2) and the electronic circuit unit (3) are separately disposed.

<6> The water pump (51) preferably overlaps at least a part of the radiator (53) disposed on the vehicle front side in the side view.

With this configuration, the connection flow path between the water pump (51) and the radiator (53) can be easily shortened.

<7> A valve unit (6) including the water pump (51) and a valve (52) preferably overlaps at least a part of the cooling plate (36) in the side view.

With this configuration, the connection flow path between the cooling plate (36) and the valve unit (6) including the water pump (51) can be easily shortened.

<8> The cooling liquid discharge port (51b) is preferably located within a width of the cooling plate (36) in an up-down direction.

With this configuration, a connection flow path between the cooling liquid discharge port (51b) of the water pump (51) and the cooling plate (36) can be easily shortened.

Hereinafter, an embodiment of a heat management structure of a vehicle will be described with reference to the drawings. In the embodiment, an electric vehicle EV will be described as an example of the vehicle, and a heat management structure 100A will be described. This disclosure is not limited to the following embodiments, and various modifications can be made without departing from the gist of this disclosure.

### [Basic Configuration]

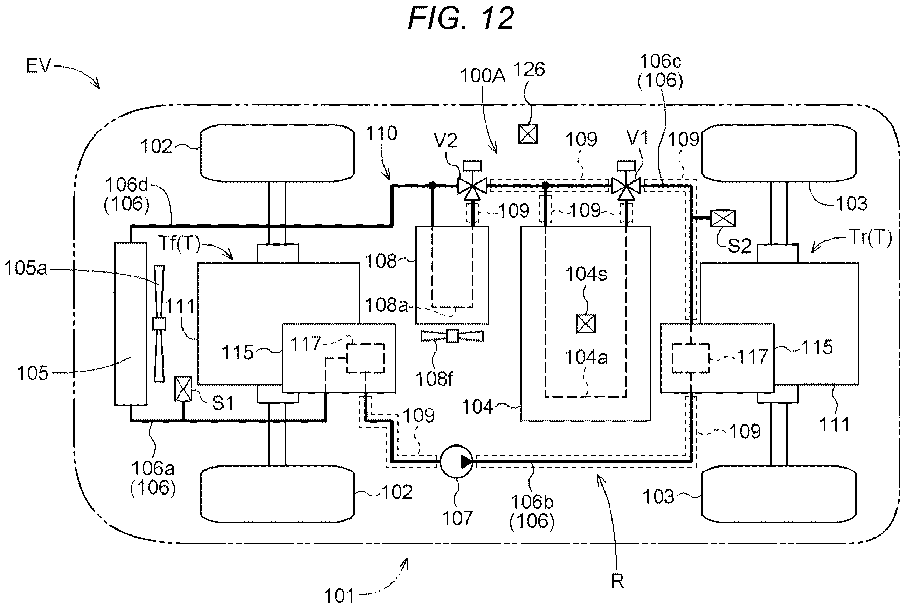

As illustrated in Fig. 12, a vehicle body 101 is provided with front wheels 102 and rear wheels 103, and a four-wheel drive electric vehicle EV (an example of a vehicle) is provided with a front wheel drive device Tf that drives the front wheels 102, a rear wheel drive device Tr that drives the rear wheels 103, and a battery 104 (an example of a temperature control target) formed of a secondary battery.

As illustrated in Fig. 12, the electric vehicle EV includes a heat exchange system R including a radiator 105 disposed at a front end of the vehicle body 101, a flow path 106 for circulating a cooling liquid to the front wheel drive device Tf and the rear wheel drive device Tr, and an electric cooling liquid pump 107 for causing the cooling liquid to flow. The heat exchange system R includes an electric radiator fan 105a that supplies cooling air to the radiator 105.

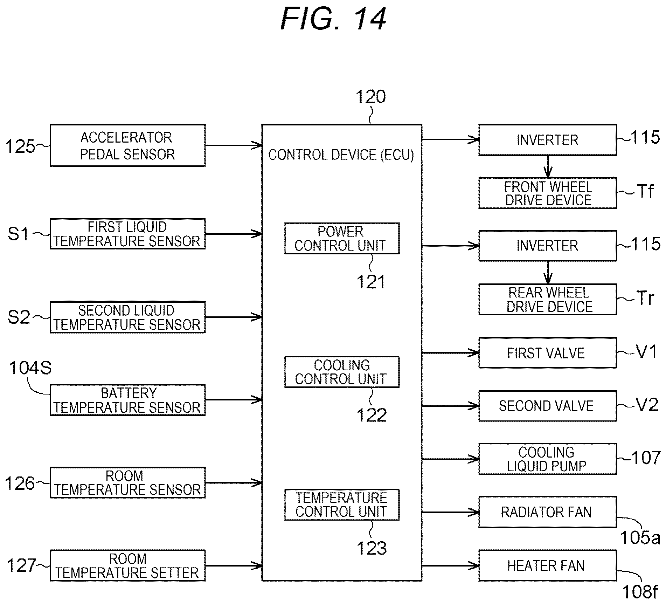

The electric vehicle EV includes the heat management structure 100A. The heat management structure 100A includes the heat exchange system R, a first valve V1 that operates electromagnetically, a second valve V2 that operates electromagnetically, and a battery temperature sensor 104S, and is controlled by a control device 120 illustrated in Fig. 14. Details of the heat management structure 100A will be described later.

A rechargeable lithium ion battery and the like are used as the battery 104. The electric vehicle EV includes the control device 120 (see Fig. 14) that functions as an ECU to supply electric power corresponding to a depression amount from the battery 104 to the front wheel drive device Tf and the rear wheel drive device Tr by a depression operation of an accelerator pedal by a driver (not illustrated).

The heat exchange system R can cool a vehicle drive device T by taking heat generated in the vehicle drive device T (a superordinate concept of the front wheel drive device Tf and the rear wheel drive device Tr) as the electric vehicle EV travels.

Further, as illustrated in Fig. 12, the electric vehicle EV can supply the cooling liquid whose temperature is increased due to the heat of the vehicle drive device T, among the cooling liquid flowing through the flow path 106, to a battery flow path 104a of the battery 104 (temperature control target) and a core flow path 108a of a heat core 108 (heat exchanger for heating: an example of the temperature control target). Accordingly, the temperature of the battery 104 can be increased, and a temperature of a vehicle cabin can be increased by the heat core 108. That is, the battery 104 and the heat core 108 are disposed at positions where the temperature can be increased by the heat taken from the vehicle drive device T by the cooling liquid.

The heat core 108 includes an electric heater fan 108f that sends air heated in the core flow path 108a.

### [Vehicle Drive Device]

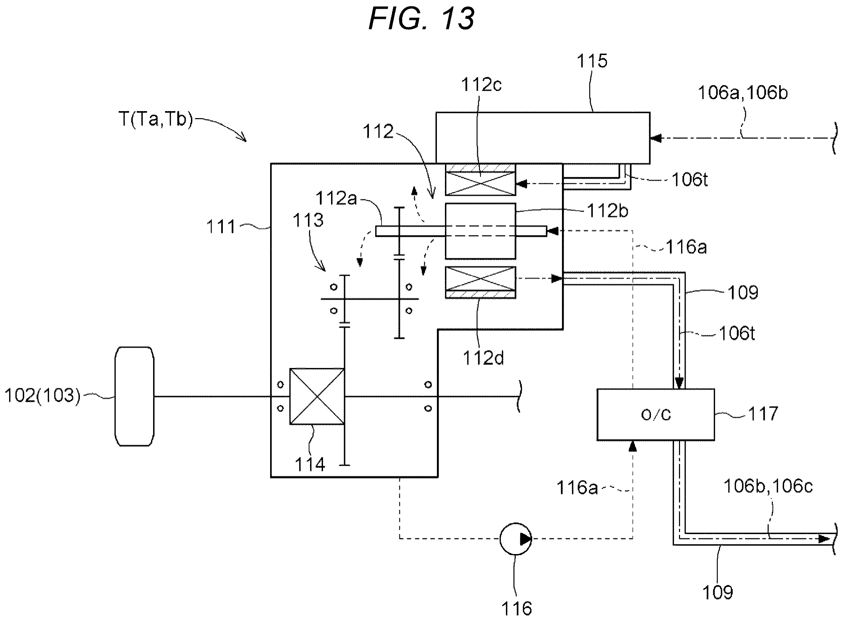

As illustrated in Fig. 13, the vehicle drive device T includes a case 111, an electric motor 112 disposed inside the case 111, a reduction gear mechanism 113, and a differential gear 114. The vehicle drive device T includes an inverter 115 that controls electric power supplied to the electric motor 112 on an outer surface of the case 111.

The electric motor 112 includes a shaft 112a that is rotatably supported by the case 111, a rotor 112b that rotates integrally with the shaft 112a, and a stator 112d that is disposed on an outer periphery of the rotor 112b and that includes a plurality of coils 112c. With this configuration, in the vehicle drive device T, a drive force of the shaft 112a is decelerated by the reduction gear mechanism 113, and is transmitted from the differential gear 114 to the wheels (the front wheels 102 and the rear wheels 103) by the driving of the electric motor 112.

The inverter 115 includes a power control element such as a transistor, and controls electric power supplied to the plurality of coils 112c of the stator 112d of the electric motor 112. In the inverter 115, the power control element and the like generate heat when electric power is supplied. The coil 112c of the stator 112d of the electric motor 112 generates heat when energized.

The vehicle drive device T includes an intermediate flow path 106t that supplies the cooling liquid from the flow path 106 in order to prevent heat generation of the inverter 115 and the stator 112d of the electric motor 112. That is, inside the inverter 115, the cooling liquid flows to, for example, a portion to which heat of a heat sink of the power control element is transmitted, and then flows to a portion of a yoke to which heat of the plurality of coils 112c of the stator 112d is transmitted. When the cooling liquid flows in this way, the cooling liquid takes heat generated in the coil 112c, and the temperature increases.

The vehicle drive device T includes an oil pump 116 that supplies cooling oil to the inside of the shaft 112a of the electric motor 112. The cooling oil has a cooling function and a lubrication function.

That is, the oil pump 116 supplies the cooling oil stored in a bottom portion of the case 111 from a circulation flow path 116a to a hole-shaped flow path at a center of the shaft 112a of the electric motor 112. A part of the cooling oil supplied to the shaft 112a is supplied to the rotor 112b from the outer periphery of the shaft 112a, and the remainder of the cooling oil is discharged from an inner end of the shaft. Accordingly, the cooling oil comes into contact with the rotor 112b and the like to take heat, and comes into contact with the reduction gear mechanism 113 to lubricate the reduction gear mechanism 113 while taking heat, and then is stored in the bottom portion of the case 111.

The vehicle drive device T includes an oil cooler 117 (described as "O/C" in Fig. 2) that reduces the temperature of the cooling oil by removing the heat of the cooling oil flowing through the circulation flow path 116a with the cooling liquid. Accordingly, the temperature of the cooling liquid supplied to the vehicle drive device T increases due to the heat generated in the inverter 115 and the heat generated inside the case 111.

The vehicle drive device T includes a heat insulating pipe 109 in an intermediate flow path 116t and the flow path 106 (a second flow path 106b or a third flow path 106c) that sends the cooling liquid from the oil cooler 117 (also see Fig. 12). The heat insulating pipe 109 functions to prevent heat radiation of the cooling liquid, and details thereof will be described later.

### [Heat Exchange System/Heat Management Structure]

In the heat exchange system R, cooling water containing a long-life coolant (LLC) containing ethylene glycol, propylene glycol, and the like is used as the cooling liquid. As illustrated in Fig. 12, the flow path 106 includes a first flow path 106a, the second flow path 106b, the third flow path 106c, and a fourth flow path 106d.

The heat exchange system R includes the cooling liquid pump 107 that sends the cooling liquid to the second flow path 106b. The cooling liquid pump 107 can be provided not only in the second flow path 106b but also at any position in the flow path 106.

The first flow path 106a is formed in a region where the cooling liquid in a heat radiation state sent from the radiator 105 is supplied to the front wheel drive device Tf. The second flow path 106b is formed in a region where the cooling liquid whose temperature has increased by flowing to the front wheel drive device Tf is supplied to the rear wheel drive device Tr. The third flow path 106c is formed in a region where the cooling liquid whose temperature has further increased by flowing to the rear wheel drive device Tr is supplied to the battery 104 and the heat core 108. The fourth flow path 106d is formed in a region where the cooling liquid flowing through the third flow path 106c is supplied (returned) to the radiator 105. In the heat exchange system R, the fourth flow path 106d is formed between the second valve V2 and the radiator 105 illustrated in Fig. 12.

As illustrated in Fig. 12, the heat management structure 100A includes an electromagnetically controlled first valve V1 formed of a three-way valve and an electromagnetically controlled second valve V2 formed of a three-way valve in the third flow path 106c of the heat exchange system R. The first valve V1 selects supply and block of the cooling liquid to the battery 104, and the second valve V2 selects supply and block of the cooling liquid to the heat core 108.

A resin hose, a metal pipe, and the like are used as the flow path 106. The heat management structure 100A includes the heat insulating pipe 109 that prevents outside air heat radiation of the cooling liquid in a region (the second flow path 106b and the third flow path 106c) in the flow path 106 extending from the vehicle drive device T to the battery 104 and the heat core 108.

By providing the heat insulating pipe 109 as described above, it is possible to apply the heat of the high-temperature cooling liquid to the battery 104 or the heat core 108 without wastefully losing the heat taken by the cooling liquid in the vehicle drive device T due to heat radiation.

The heat insulating pipe 109 may adopt a structure in which the outer periphery of the flow path 106 is covered with a tubular heat insulating material, a structure in which an elongated heat insulating material is wound around the outer periphery of the flow path 106, or a structure in which the tubular flow path 106 is inserted into a pipe having a predetermined inner diameter and an air layer or a heat insulating material layer is formed between the outer periphery of the flow path 106 and an inner periphery of the pipe.

Further, the heat management structure 100A includes a heat radiating pipe 110 that enables heat radiation of the cooling liquid in the fourth flow path 106d. It is conceivable to adopt a structure in which the heat radiating pipe 110 is formed of a metal material having good heat conduction of the flow path 106 and the flow path 106 is disposed at a position in contact with the outside air, or a configuration in which a fin for heat radiation is provided to protrude from the outer surface of the flow path 106 so as to be in contact with the outside air.

### [Control Mode]

As illustrated in Fig. 14, the control device 120 includes a power control unit 121, a cooling control unit 122, and a temperature control unit 123 which are implemented by software. The control device 120 receives signals output from an accelerator pedal sensor 125, a first liquid temperature sensor S1, a second liquid temperature sensor S2, the battery temperature sensor 104S, a room temperature sensor 126, and a room temperature setter 127.

Each of the power control unit 121, the cooling control unit 122, and the temperature control unit 123 is not necessarily implemented by software, and a part thereof may be implemented by hardware such as a logic circuit.

The control device 120 outputs control signals to the inverter 115 of the front wheel drive device Tf, the inverter 115 of the rear wheel drive device Tr, the first valve V1, the second valve V2, the cooling liquid pump 107, the radiator fan 105a, and the heater fan 108f.

The electric power control unit 121 supplies, to the electric motors 112 of the front wheel drive device Tf and the rear wheel drive device Tr, electric power corresponding to a depression amount of the accelerator pedal detected by the accelerator pedal sensor 125. Accordingly, the power control unit 121 implements traveling of the vehicle body 101 at a speed corresponding to the depression amount of the accelerator pedal.

The cooling control unit 122 controls an air volume of cooling air of the radiator fan 105a and a flow rate of the cooling liquid of the cooling liquid pump 107 based on a temperature of the cooling liquid detected by the first liquid temperature sensor S1 and the second liquid temperature sensor S2. That is, the cooling control unit 122 implements cooling for preventing a temperature increase of the front wheel drive device Tf and the rear wheel drive device Tr.

The temperature control unit 123 controls the first valve V1 and the second valve V2 to control the temperature of the battery 104 as a temperature control target and the temperature of the heat core 108 as a temperature control target, and further controls the heater fan 108f.

That is, when it is determined that the temperature detected by the battery temperature sensor 104S is lower than a target value, the temperature control unit 123 controls the first valve V1 to supply the cooling liquid to a temperature control flow path of the battery 104. Accordingly, the temperature of the battery 104 is increased.

The temperature control unit 123 controls the second valve V2 to supply the cooling liquid to the core flow path 108a when it is determined that the temperature of the vehicle cabin needs to be increased based on a set value of the room temperature setter 127 and a temperature difference detected by the room temperature sensor 126. Further, the temperature control unit 123 drives the heater fan 108f. Accordingly, the temperature of the vehicle cabin is increased.

The heat exchange system R may be implemented without including the second valve V2, and it is also conceivable to implement the flow path 106 such that the cooling liquid always flows to the heat core 108, and to set a control mode to stop the heater fan 108f when it is not necessary to increase the temperature of the vehicle cabin.

The temperature control unit 123 can perform control to reduce the flow rate of the cooling liquid of the cooling liquid pump 107 and stop the radiator fan 105a when a rapid temperature increase is intended.

### [Operation and Effects of Embodiment]

When the electric vehicle EV travels, the temperature of the cooling liquid increases due to the heat generated by the vehicle drive device T (the front wheel drive device Tf and the rear wheel drive device Tr). The heat radiation of the cooling liquid whose temperature increases in this way is prevented by the heat insulating pipe 109, the temperature of the battery 104 can be efficiently increased even in cold regions, and the temperature of the vehicle cabin can be efficiently increased by the heat core 108.

In the heat exchange system R, the heat of the cooling liquid that has passed through at least one of the battery 104 and the heat core 108 in the flow path 106 can be radiated by the heat radiating pipe 110 before reaching the radiator 105. Therefore, the temperature of the cooling liquid is lowered before the cooling liquid reaches the radiator 105, and efficient heat radiation is implemented in the radiator 105.

The heat management structure 100A includes the heat exchange system R, the first valve V1, the second valve V2, and the control device 120. In the heat exchange system R, the flow path 106 of the heat exchange system R is implemented such that the cooling liquid continuously flows to the front wheel drive device Tf and the rear wheel drive device Tr. Therefore, the heat management structure 100A can easily increase the temperature of the cooling liquid by the combined heat amount of the two vehicle drive devices T even in a situation where a heat generation amount of the front wheel drive device Tf and the rear wheel drive device Tr is small, such as when the vehicle body 101 travels at a low speed.

Since the heat management structure 100A can supply and block the cooling liquid to the battery flow path 104a of the battery 104 by the first valve V1, the cooling liquid can be supplied to the battery flow path 104a to increase the temperature of the battery 104. On the other hand, by blocking the supply of the cooling liquid to the battery flow path 104a, it is possible to prevent an increase in the temperature of the battery 104 and prevent an excessive increase in the temperature of the battery 104.

Similarly, since the supply and block of the cooling liquid to the core flow path 108a of the heat core 108 can be performed by the second valve V2, the temperature of the vehicle cabin can be increased when necessary.

In the heat management structure 100A, since the vehicle drive device T (the front wheel drive device Tf and the rear wheel drive device Tr) can apply, to the cooling liquid, not only the heat of the inverter 115 but also the heat of the electric motor 112 inside the case 111, the temperature increase of the vehicle drive device T can be prevented and the temperature of the cooling liquid can be efficiently increased.

### [Modification]

In the above embodiment, the flow path 106 (the second flow path 106b or the third flow path 106c) includes the heat insulating pipe 109 in a region extending from the vehicle drive device T to the temperature control target (the battery 104 or the heat core 108). In addition, the first flow path 106a may be implemented by the heat insulating pipe 109, and the heat management structure 100A may include the heat insulating pipe 109 in a region extending from the radiator 105 to the temperature control target (the battery 104, the heat core 108: the heat exchanger for heating). In this case, even when an outside air temperature is high, heat absorption of the cooling liquid from the radiator 105 to the vehicle drive device T is prevented, so that the vehicle drive device T can be efficiently cooled. When the outside air temperature is low, heat radiation of the cooling liquid from the radiator 105 to the vehicle drive device T is prevented, and thus it is possible to promote warm-up of the temperature control target (the battery 104, the heat core 108: the heat exchanger for heating).

### [Another Embodiment]

In addition to the above embodiments, this disclosure may be implemented as follows (those having the same functions as the above embodiments are denoted by the same reference numerals as in the above embodiments).

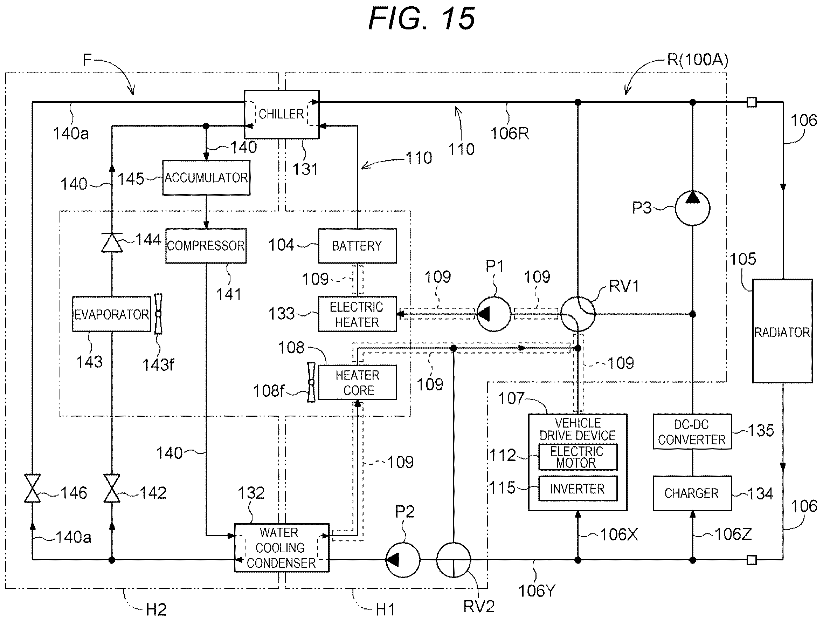

(a) Fig. 15 illustrates the heat management structure 100A in which the heat exchange system R having a cooling flow path through which a cooling liquid circulates and a cooling system F having a refrigerant flow path through which a refrigerant capable of cooling a vehicle cabin circulates are integrated in the electric vehicle EV (the vehicle is not illustrated in Fig. 15).

The heat management structure 100A houses a main part of the heat exchange system R in a first housing H1, and houses a main part of the cooling system F in a second housing H2. In the heat management structure 100A, a chiller 131 and a water cooling condenser 132 are disposed at a boundary between the first housing H1 and the second housing H2, and heat exchange can be performed between the cooling fluid of the heat exchange system R and the refrigerant of the cooling system F.

In the heat exchange system R, cooling water containing a long-life coolant (LLC) containing ethylene glycol, propylene glycol, and the like is used as the cooling liquid. In the cooling system F, a refrigerant such as a hydrofluorocarbon (HFC) and a hydrofluoroolefin (HFO) is used as the refrigerant.

In another embodiment (a), the vehicle drive device T provided in the heat exchange system R includes the electric motor 112 and the inverter 115 similarly to the above embodiments, and functions similarly to the above embodiments.

In another embodiment (a), the battery 104 includes a flow path similar to the battery flow path 104a of the above embodiments, and includes a sensor similar to the battery temperature sensor 104S of the above embodiments, but is not illustrated in the drawings.

The first housing H1 includes therein an electric first pump P1, a second pump P2, and a third pump P3, and further includes an electric first rotary valve RV1 and a second rotary valve RV2.

### [Heat Exchange System of Another Embodiment (a)]

The heat exchange system R illustrated in Fig. 15 illustrates a setting state of the first rotary valve RV1 and the second rotary valve RV2 when the electric vehicle EV (vehicle) travels. In this setting state, the cooling liquid cooled by the radiator 105 branches and flows from the flow path 106 to a first branch flow path 106X, flows to the vehicle drive device T, the first rotary valve RV1, the first pump P1, an electric heater 133, the battery 104, and the chiller 131, and is returned from the chiller 131 to the radiator 105 through a return flow path 106R.

The electric heater 133 is driven (supplied with electric power) when a rapid temperature increase is required in a situation where the battery 104 is at a low temperature, and the temperature of the cooling liquid supplied from the first pump P1 is increased. The chiller 131 radiates heat of the cooling liquid by absorbing heat due to expansion of the refrigerant of the cooling system F, and sends the cooling liquid to the return flow path 106R.

In this setting state, the cooling liquid cooled by the radiator 105 branches from the flow path 106 to a second branch flow path 106Y, flows to the second pump P2, the water cooling condenser 132, and the heat core 108 for air conditioning, and joins the upstream side of the first pump P1.

When the water cooling condenser 132 condenses the refrigerant of the cooling system F, the cooling liquid supplied from the second branch flow path 106Y takes heat. Accordingly, the cooling liquid whose temperature has increased is sent from the water cooling condenser 132 to the heat core 108.

Further, in this setting state, the cooling liquid cooled by the radiator 105 branches from the flow path 106 and flows to a third branch flow path 106Z, flows to a charger 134, a DC-DC converter 135, and the third pump P3, joins the return flow path 106R, and is returned to the radiator 105.

In particular, in the heat exchange system R, the flow path 106 through which the cooling liquid flows from the vehicle drive device T to the electric heater 133 and the flow path 106 through which the cooling liquid flows from the electric heater 133 to the battery 104 have the heat insulating pipe 109. In the heat exchange system R, the flow path 106 through which the cooling liquid flows from the water cooling condenser 132 to the heat core 108 and the flow path 106 in a region where the cooling liquid joins the upstream side of the first pump P1 from the heat core 108 have the heat insulating pipe 109. Similarly to the above embodiment, the heat insulating pipe 109 may be disposed in the flow path 106 through which the cooling liquid flows from the radiator 105 to the vehicle drive device T and the flow path 106 through which the cooling liquid flows from the radiator 105 to the water cooling condenser 132.

In the cooling system F, a flow path through which the cooling liquid flows from the battery 104 to the chiller 131 and the return flow path 106R to which the cooling liquid is sent from the chiller 131 have the heat radiating pipe 110.

### [Cooling System of Another Embodiment (a)]

The cooling system F illustrated in Fig. 15 includes a main refrigerant flow path 140 for air conditioning and a sub-refrigerant flow path 140a for cooling a cooling liquid. That is, in the sub-refrigerant flow path 140a, a part of the refrigerant sent out from the water cooling condenser 132 branches and flows to the sub-refrigerant flow path 140a.

In the cooling system F, the refrigerant flows through a compressor 141, the water cooling condenser 132, a main expansion valve 142, an evaporator 143, a check valve 144, and an accumulator 145 in the main refrigerant flow path 140, and is returned to the compressor 141.

Further, in the cooling system F, the refrigerant flowing through a sub-expansion valve 146 of the sub-refrigerant flow path 140a flows through the chiller 131 and then joins the main refrigerant flow path 140. The evaporator 143 includes a cooling fan 143f that supplies cold air to the vehicle cabin.

In the cooling system F, in the main refrigerant flow path 140, the refrigerant compressed by the compressor 141 is supplied to the water cooling condenser 132, and the refrigerant is condensed and liquefied by being deprived of heat by the cooling liquid in the water cooling condenser 132. The refrigerant expands in the main expansion valve 142, is supplied to the evaporator 143 in a mist form, and evaporates by taking heat in the evaporator 143. Accordingly, the cooling fan 143f is driven to cool the vehicle cabin.

Next, when the refrigerant flows to the accumulator 145, the liquid contained in the refrigerant is removed, and the gaseous refrigerant is supplied to the compressor 141.

In the cooling system F, among the refrigerant sent out from the water cooling condenser 132 in the sub-refrigerant flow path 140a, the refrigerant passing through the sub-expansion valve 146 evaporates in the chiller 131, and the temperature of the cooling liquid sent out from the chiller 131 to the return flow path 106R is reduced.

### [Operation and Effects of Another Embodiment (a)]

As described above, the cooling liquid heated by the vehicle drive device T is supplied to the battery 104 as a temperature control target, so that the temperature of the battery 104 is increased. After the cooling liquid heated by the water cooling condenser 132 passes through the heat core 108, the cooling liquid is supplied to the battery 104, and the temperature of the battery 104 can be increased.

Among the cooling liquid, the cooling liquid whose temperature has increased flows through the heat insulating pipe 109 constituting the return flow path 106R, and is supplied to the battery 104 in a state where a temperature decrease is prevented, thereby enabling an efficient temperature increase.

The cooling liquid that has passed through the battery 104 is cooled by the chiller 131 and flows through the heat radiating pipe 110 to radiate heat, thereby implementing good heat radiation of the vehicle drive device T.

In particular, in the configuration of another embodiment (a), the heat management structure 100A that favorably performs heat exchange between the heat exchange system R and the cooling system F is implemented by combining the heat exchange system R and the cooling system F.

(b) The heat insulating pipe 109 is provided in a region of the flow path 106 extending over the first flow path 106a, the second flow path 106b, and the third flow path 106c. That is, in another embodiment (b), by preventing the heat radiation of the cooling liquid sent out from the radiator 105, it is possible to prevent the temperature decrease of the cooling liquid whose temperature is increased by the vehicle drive device T while preventing the inconvenience that the temperature of the cooling liquid excessively decreases.

(c) In a vehicle such as a fuel cell vehicle (FCV) or a hybrid vehicle (HV) that travels by a drive force of the electric motor 112, the temperature of the battery 104 may be increased by the cooling liquid.

(d) In the embodiment, the four-wheel drive electric vehicle EV is illustrated, but the heat management structure 100A may be provided in an FF vehicle including the vehicle drive device T that drives only the front wheels 102. Similarly, the heat management structure 100A may be provided in an RR vehicle including the vehicle drive device T at the rear portion of the vehicle body 101 to drive only the rear wheels 103, or an FR vehicle in which the rear wheels 103 are driven by the vehicle drive device T provided at a front portion of the vehicle body 101.

(e) The temperature control target is not limited to the battery 104 or the heat core 108 (the heat exchanger for heating), and for example, in a vehicle that transports a substance in a state of being maintained at a temperature exceeding a set temperature, the heat management structure 100A may be implemented to manage a temperature of the substance.

In the embodiments described above, the following configurations are conceivable.
(1) The heat management structure 100A of the vehicle including the heat exchange system R that circulates the cooling liquid between the radiator 105 and the temperature control target (the battery 104 and the heat core 108) includes: the vehicle drive device T that obtains a traveling drive force by transmitting the drive force of the electric motor 112 to the wheels 102 and 103; and the flow path 106 that circulates the cooling liquid, which has taken heat generated from the vehicle drive device T, in the region over the vehicle drive device T, the temperature control target (the battery 104 and the heat core 108), and the radiator 105. The temperature control target (the battery 104 and the heat core 108) is disposed at a position where the temperature can be increased by the heat applied from the vehicle drive device T. The flow path 106 includes the heat insulating pipe 109 that prevents outside air heat radiation of the cooling liquid in the region extending from the vehicle drive device T to the temperature control target (the battery 104 and the heat core 108).
   According to this, when the cooling liquid circulates, the heat generated in the vehicle drive device T with the driving of the electric motor 112 is applied to the cooling liquid flowing through the flow path 106, and the heat can be applied from the cooling liquid to the temperature control target (the battery 104 and the heat core 108). Since the heat insulating pipe 109 that prevents the outside air heat radiation of the cooling liquid is provided in the region of the flow path 106 extending from the vehicle drive device T to the temperature control target (the battery 104 and the heat core 108), it is possible to apply the heat taken from the vehicle drive device T to the temperature control target without wastefully losing the heat. Further, the heat exchange system R can prevent the temperature increase of the vehicle drive device T by supplying the cooling liquid having radiated heat in the radiator 105 to the vehicle drive device T.
(2) In the heat management structure 100A according to (1), the temperature control target is preferably at least one of the heat exchanger for heating (the heat core 108), which increases the temperature of the vehicle cabin, and the battery 104 that supplies electric power to the electric motor 112.
   According to this, it is possible to increase the temperature of the vehicle cabin by supplying the cooling liquid whose temperature has increased to the heat exchanger for heating (the heat core 108: the heat exchanger for heating). By supplying the cooling liquid whose temperature is increased to the battery 104, it is possible to increase the temperature of the battery 104 and improve a performance of the battery 104.
(3) In the heat management structure 100A according to (1) or (2), the flow path 106 preferably includes the heat radiating pipe 110 that enables outside air heat radiation of the cooling liquid flowing through the region from the temperature control target to the radiator 105.
   According to this, the heat of the cooling liquid that has passed through the temperature control target (the battery 104, the heat core 108: the heat exchanger for heating) is radiated in the heat radiating pipe 110, so that the temperature of the cooling liquid is lowered before the cooling liquid reaches the radiator 105, and efficient heat radiation can be performed in the radiator 105.
(4) In the heat management structure 100A according to (1), the heat insulating pipe 109 is preferably provided in a region of the flow path 106 from the radiator 105 to the temperature control target (the battery 104, the heat core 108: the heat exchanger for heating).

According to this, for example, the heat insulating pipe 109 prevents the inconvenience that the temperature of the cooling liquid sent out from the radiator 105 decreases before reaching the vehicle drive device T in a cold region. When the cooling liquid takes heat from the vehicle drive device T, the temperature of the cooling liquid does not significantly decrease, and thus it is possible to easily increase the temperature and to prevent a decrease in the amount of heat applied to the temperature control target (the battery 104, the heat core 108: the heat exchanger for heating).

The configurations disclosed in the above embodiments (including other embodiments, the same applies hereinafter) can be applied in combination with configurations disclosed in other embodiments as long as no contradiction occurs, and the embodiments disclosed in this specification are illustrative, and the embodiments disclosed herein are not limited thereto, and can be modified as appropriate without departing from the purpose of this disclosure.

### Industrial Applicability

The disclosure is widely applicable to a vehicle drive device of an electric vehicle.

### Reference Signs List

1: integration unit
2: drive unit for electric vehicle
3: electronic circuit unit
5: unit case (casing)
5A: side surface (outer surface)
6: valve unit
21: electric motor
31: electronic circuit
36: cooling plate
39: connection flow path
51: water pump
51a: cooling liquid suction port
51b: cooling liquid discharge port
52: valve
53: radiator
A: vehicle drive device

## Claims

1. A vehicle drive device comprising:
a casing incorporating an electronic circuit unit including at least an electronic circuit for driving an electric motor that transmits a drive rotational force to a traveling system of a vehicle;
a cooling plate to which the electronic circuit unit is fixed and through which a cooling liquid flows; and
a water pump configured to circulate the cooling liquid inside the cooling plate, wherein
the water pump is fixed to an outer surface of the casing at a position overlapping at least a part of the cooling plate in a side view.

2. The vehicle drive device according to claim 1, wherein
the water pump is disposed between a radiator disposed on a vehicle front side and the cooling plate.

3. The vehicle drive device according to claim 1, wherein
the water pump has a cooling liquid suction port and a cooling liquid discharge port, and the cooling liquid discharge port overlaps at least a part of the cooling plate in the side view.

4. The vehicle drive device according to any one of claims 1 to 3, wherein
the water pump has a cooling liquid suction port and a cooling liquid discharge port, and
a connection flow path between the cooling liquid discharge port and the cooling plate is formed along a bottom surface of the cooling plate.

5. The vehicle drive device according to any one of claims 1 to 3, further comprising:
an integration unit in which the electronic circuit unit and a drive unit for electric vehicle including at least the electric motor are incorporated and integrated in the casing.

6. The vehicle drive device according to any one of claims 1 to 3, wherein
the water pump overlaps at least a part of a radiator disposed on a vehicle front side in the side view.

7. The vehicle drive device according to any one of claims 1 to 3, wherein
a valve unit including the water pump and a valve overlaps at least a part of the cooling plate in the side view.

8. The vehicle drive device according to claim 3, wherein
the cooling liquid discharge port is located within a width of the cooling plate in an up-down direction.
